# EUROPÄISCHE PATENTSCHRIFT

(11) **EP 4 014 725 B1**
(45) Veröffentlichungstag und Bekanntmachung des Hinweises auf die Patenterteilung: **08.07.2026**
(21) Anmeldenummer: 21213381.3
(22) Anmeldetag: 09.12.2021
(51) Int. Cl.: A01J 25/16

(54) **WENDEVORRICHTUNG ZUM WENDEN VON KÄSELAIBEN**
TURNING DEVICE FOR TURNING CHEESE WHEELS
DISPOSITIF PERMETTANT DE RETOURNER DES MEULES DE FROMAGE

(30) Priorität: 21.12.2020 CH 16362020
(43) Veröffentlichungstag der Anmeldung: 22.06.2022
(73) Patentinhaber: Kaesaro AG, 9444 Diepoldsau (CH)
(72) Erfinder: Lässer, Franz, 9444 Diepoldsau (CH)
(74) Vertreter: Gachnang AG Patentanwälte

(56) Entgegenhaltungen:
- WO-A1-2012/172506
- GB-A- 699 511
- SE-C1- 96 212

## Beschreibung

Die Erfindung bezieht sich auf eine Wendevorrichtung zum Wenden von Käselaiben nach dem Oberbegriff des Anspruchs 1 und auf eine Verwendung dieser Wendevorrichtung in einer Vorrichtung zum Schmieren von Käselaiben.

Bei der Käseherstellung wird Käsebruch in Formen gepresst und anschliessend werden die Käselaibe nebeneinander auf Käsebrettern in Lagern gereift. Während dieser Lagerung werden die Käselaibe regelmässig gewendet, so dass die grossen parallel verlaufenden Aussenflächen abwechselnd als Käseoberseite und Käseunterseite wahrgenommen werden. Die Aussenfläche eines Käselaibs wird von der Käseoberseite, der Käseunterseite und einer Järbseite gebildet, wobei die Järbseite die Käseoberseite mit der Käseunterseite verbindet. Die Järbseite wird auch als Käserand bezeichnet. Bei den meisten Käsen ist der Umfang der Ober- und Unterseite kreisförmig. Für Raclette oder andere Käse wird auch ein quadratischer Umfang gewählt, so dass diese Käselaibe zum Schneiden von flachen Stücken besser geeignet sind.

Zum Erzielen einer gewünschten Reifung und einer härteren Oberfläche, bzw. einer Käserinde, wird die jeweilige Oberseite und die Järbseite mittels Bürsten mit einer vorzugsweise salzhaltigen Flüssigkeit behandelt. Diese Behandlung wird als Schmieren bezeichnet.

Wenn beispielsweise Käselaibe 7kg schwer sind und während einer 15 Monate langen Reifezeit anfänglich täglich, später weniger oft, gewendet und abgerieben bzw. geschmiert werden, so ergibt sich für das Wenden und für das Schmieren ein grosser Arbeitsaufwand, der möglichst weitgehend mit Anlagen durchgeführt wird. Es gibt Anlagen mit stationären und solche mit mobilen Vorrichtungen zum Behandeln, bzw. Wenden und/oder Schmieren, von Käselaiben.

Bei stationären Vorrichtungen sind Holzbretter mit Käselaiben in sogenannten Horden zusammengestellt und die Horden oder aus den Horden entnommene Stapel mit Brettern und Käselaiben werden beispielsweise von selbstfahrenden Transportgeräten zu einer stationären Vorrichtung transportiert. Nach der Behandlung der Käselaibe werden die Horden oder die Stapel wieder in den ihnen zugeordneten Lagerbereich transportiert.

Bei einer selbstfahrenden Vorrichtung zum Behandeln von Käselaiben bewegt sich die Vorrichtung durch Lagergassen und behandelt bei der jeweils aktuellen Position seitlich der Gasse gelagerte Käselaibe. Die seitlich der Gasse auf Käsebrettern gelagerten Käselaibe werden auf den Käsebrettern von einer Fördereinrichtung zur Vorrichtung zum Behandeln gebracht und dann behandelt. Nach der Behandlung bringt die Fördereinrichtung die Bretter mit den Käselaiben wieder in eine Lagerposition. Wenn in der aktuellen Position der selbstfahrenden Vorrichtung die von der Steuerung zum Behandeln vorgesehenen Käselaibe behandelt sind, bewegt sich die selbstfahrende Vorrichtung zur nächsten Position mit gelagerten Käselaiben und behandelt diese. Wenn die zum Behandeln vorgesehenen Käselaibe einer Gasse behandelt sind, kann die selbstfahrende Vorrichtung in einer nächsten Gasse eingesetzt werden.

CH 420 714 beschreibt ein mobiles Pflegegerät, das einzelne grosse Käselaibe mit einem Gabelstapler von einer Regalfläche anhebt, aus dem Regal zieht, um eine Staplerachse dreht und über eine Wendevorrichtung auf einen Behandlungstisch einer Schmiereinrichtung bringt. EP 1 941 794 B1 zeigt ein weiteres Pflegegerät, welches seitlich einzelne Käselaibe aus einem Regal entnimmt gegebenenfalls wendet und auf einen Tisch ablegt. Die von diesen Geräten durchgeführten Bewegungen sind umständlich und die Pflegegeräte können während der für das Zuführen, Wenden, und gegebenenfalls Schmieren und Zurückführen eines Käselaibes nötigen Zeit gerade nur einen Käselaib aufnehmen.

WO 2012/172506 A1 beschreibt eine selbstfahrende Vorrichtung, bei der eine kombinierte Wende- und Schmiereinrichtung auf die jeweilige Regalhöhe bewegt wird, von der ein erstes Käsebrett mit mehreren Käselaiben in die Vorrichtung aufgenommen und dabei die Oberseite der Käselaibe gebürstet wird. Die Vorrichtung hält ein zweites Käsebrett bereit, dem die Oberseiten der Käselaibe zugeführt werden. Die beiden beidseits der Käselaibe angeordneten Käsebretter und die Käselaibe werden in einem ersten Schritt um 90° um eine parallel zu den Längsachsen der Käsebretter verlaufende Achse gedreht. Die Käselaibe gelangen dadurch in eine Lage, bei der ihre Unter- und Oberseiten vertikal ausgerichtet sind. Die umlaufende Randfläche liegt in einem unteren Bereich auf einem Antriebsband auf, mittels dem die Käselaibe in eine Drehung versetzt und dabei die Randflächen der Käselaibe gebürstet werden. Anschliessend werden die Käsebretter und die Käselaibe in einem zweiten Schritt um 90° um die parallel zu den Längsachsen der Käsebretter verlaufende Achse gedreht. Danach können die Käselaibe auf dem zweiten Käsebrett in das Regal geschoben werden.

Die Kombination des Wendens und Bürstens führt dazu, dass sich diese beiden Behandlungen gegenseitig unterbrechen, und reduziert die Qualität des Wendens und des Bürstens. Wenn junge Käselaibe für das Bürsten des Randes auf dem Rand aufliegend gedreht werden, können diese Käselaibe beschädigt werden, weil sie dazu noch nicht genügend stabil sind. Die höhenverstellbare Bewegungsvorrichtung und die Zuführung aller für das Wenden und Bürsten nötigen elektrischen und fluiden Speisungen ist äusserst komplex und es muss ein grosses Gewicht vertikal bewegt werden.

SE 96 212 C1 und GB 699 511 A beschreiben Käselager-Regale mit übereinander angeordneten Paaren von um ihre Längsachsen drehbaren Käseaufnahmen. Die auf den Regalen gelagerten Käselaibe sind entlang der Längsachsen nebeneinander angeordnet und werden bei der Drehung der Käseaufnahmen um diese Längsachsen gewendet. Die Drehlagerung aller Käseaufnahmen eines Käselager-Regals ist mit einem grossen Aufwand verbunden.

Aus dem Stande der Technik sind weitere Vorrichtungen bekannt, welche jeweils die auf einem Käsebrett nebeneinander angeordneten Käselaibe um eine Wendeachse bewegen, welche parallel zur Längsachse des Käsebrettes, bzw. parallel zu einer Anordnungsachse durch die Mittelpunkte aller nebeneinander angeordneten Käselaibe, verläuft. Diese Lösungen lassen verschiedene Optimierungen nicht oder nur mit grossem Aufwand zu.

Die erfindungsgemässe Aufgabe besteht nun darin eine einfache Lösung zu finden, welche weitere Optimierungen zulässt.

Diese Aufgabe wird durch eine Wendevorrichtung mit den Merkmalen des Anspruchs 1 gelöst. Die abhängigen Ansprüche beschreiben alternative bzw. vorteilhafte Ausführungsvarianten, welche weitere Aufgaben lösen. Die erfindungsgemässe Lösung umfasst auch gemäß Anspruch 11 die Verwendung der Wendevorrichtung gemäss Anspruch 1 in einer Vorrichtung zum Schmieren von Käselaiben.

Im Rahmen eines ersten erfinderischen Schrittes wurde erkannt, dass die Lösungen des Standes der Technik beim gleichzeitigen Wenden von nebeneinander angeordneten Käselaiben aufgrund eines Vorurteils davon ausgehen, dass die Käselaibe um eine gemeinsame Wendeachse bewegt werden müssen, welche parallel zu einer Anordnungsachse durch die Mittelpunkte der Käse verläuft.

Im Rahmen eines zweiten erfinderischen Schrittes wurde erkannt, dass die Möglichkeiten der Wendevorrichtung erweitert werden, wenn mindestens drei entlang einer Anordnungsachse nebeneinander angeordnete Käselaibe um mindestens zwei voneinander beabstandete Wendeachsen bewegt werden, welche quer, vorzugsweise orthogonal, zur Anordnungsachse verlaufen. Die Ausrichtung der mindestens zwei Wendeachsen quer, vorzugsweise orthogonal, zur Anordnungsachse ermöglicht es, dass die Käselaibe mit einer Wendebewegung nicht nur gewendet werden, sondern dass dabei auch ihre Positionen in Richtung der Anordnungsachse geändert werden können.

Damit die Bewegung der Käselaibe um die mindestens zwei Wendeachsen zum Wechseln der grossen parallel verlaufenden Aussenflächen der Käselaibe von Oberseite zu Unterseite und umgekehrt führt, sind die mindestens zwei Wendeachsen vorzugsweise auch parallel zu den grossen Aussenflächen der Käselaibe ausgerichtet.

Eine mit dem Wendevorgang ebenfalls erzielbare Änderung der Reihenfolge der Käselaibe in Richtung der Anordnungsachse, bzw. der relativen Positionen der auf einem Käsebrett angeordneten Käselaibe, ist für ortsfeste Lagergestelle sehr vorteilhaft. Bei solchen Lagergestellen können bei Lagerpositionen, die einer Lagergasse zugewendet oder von der Lagergasse abgewendet sind, aufgrund unterschiedlich starker Zugluft unterschiedliche klimatische Bedingungen auftreten. Wenn die Käselaibe auf einem Käsebrett immer an den gleichen Positionen liegen, führen unterschiedliche klimatische Bedingungen zu einer unterschiedlichen Reifung dieser Käselaibe.

Mit der erfindungsgemässen Lösung können mit jedem Wendeprozess ohne Zusatzaufwand auch die Positionen der Käselaibe geändert werden. Dadurch kann erzielt werden, dass die Käselaibe über die Lagerzeit etwa gleich lang auf Positionen mit speziellen klimatischen Bedingungen liegen, wie auf solchen mit durchschnittlichen klimatischen Bedingungen. Trotz positionsabhängiger, unterschiedlicher klimatischer Bedingungen kann eine gleichmässigere Reifung der Käselaibe eines Käsebrettes gewährleistet werden.

Die Gleichmässigkeit der Reifung aller im Lagergestell reifenden Käselaibe wird zusätzlich dadurch erhöht, dass die Lagerhöhen des für die Behandlung durchgeführten Entnehmens und Einführens eines Käsebrettes aus dem bzw. in das Lagergestell auf unterschiedlichen Lagerhöhen erfolgt. Vorzugsweise verbringen die Käselaibe während der Reifung ähnlich lange Zeiten auf allen Lagerhöhen.

Die erfindungsgemässe Wendevorrichtung zum Wenden von Käselaiben umfasst mindestens drei vor und nach dem Wenden entlang einer Anordnungsachse nebeneinander angeordnete Wendeaufnahmen in denen die Käselaibe so wendbar sind, dass die Unterseiten und die Oberseiten der Käselaibe ihre jeweiligen Relativpositionen wechseln. Jede Wendeaufnahme umfasst einen Aufnahmebereich zum Halten eines Käselaibs und jede Wendeaufnahme ist um eine Wendeachse bewegbar, welche quer, vorzugsweise orthogonal, zur Anordnungsachse verläuft. Mindestens zwei Wendeachsen der Wendeaufnahmen sind in Richtung der Anordnungsachse in Abständen zueinander angeordnet.

Für einen Wendevorgang werden Käselaibe in die Wendeaufnahmen eingebracht. Die Wendeaufnahmen mit den darin angeordneten Käselaiben werden um ihre Wendeachse bewegt, vorzugsweise um 180°. Danach werden die gewendeten Käselaibe aus den Wendeaufnahmen entnommen und behandelt oder gelagert.

Bei einer vorteilhaften Ausführungsform verläuft die Wendeachse jeder Wendeaufnahme auch parallel zu einer der Oberseite oder Unterseite des Käselaibs zugeordneten Aufnahmeebene (11) der jeweiligen Wendeaufnahme. Damit wird gewährleistet, dass die Aufnahmeebenen der Wendeaufnahmen vor und nach dem Wenden parallel zueinander ausgerichtet sind.

Gemäss einer vorteilhaften Ausführungsform verläuft die Wendeachse der jeweiligen Wendeaufnahme ausserhalb eines Zylindermantels, der an die Järbseite des in der Wendeaufnahme aufgenommenen Käselaibs anliegt. Das heisst, dass die Wendeachse ausserhalb eines Zylinders verläuft, der an den Umfang des entsprechenden Aufnahmebereichs anliegt und dessen Achse sich orthogonal zu einer der Oberseite oder Unterseite des Käselaibs zugeordneten Aufnahmeebene der Wendeaufnahme erstreckt. Eine Wendeaufnahme mit dieser relativ zur Wendeaufnahme seitlich angeordneten Wendeachse versetzt den im Aufnahmebereich angeordneten Käselaib beim Wenden auch in der Richtung der Anordnungsachse.

Bei einer weiteren vorteilhaften Ausführungsform weist die Wendeeinrichtung eine gerade Anzahl von Wendeaufnahmen auf und jeweils zwei benachbarte Wendeaufnahmen umfassen als Wendepaar eine gemeinsame Wendeachse, die in einer zentralen Ebene zwischen den beiden Wendeaufnahmen liegt. Die Wendeachsen von verschiedenen Wendepaaren sind in Richtung der Anordnungsachse in Abständen zueinander angeordnet. Die Käselaibe in den Wendeaufnahmen mit der gemeinsamen Wendeachse wechseln beim Wenden ihren Platz bzw. ihre Reihenfolge in Richtung der Anordnungsachse. Wenn in einem Käselager auf jedem Käsebrett vier Käse gelagert sind, so können vier Wendeaufnahmen in der Form von zwei Wendepaaren ausgebildet werden, welche beim Wenden je den Platz der beiden auf einer gemeinsamen Bretthälfte angeordneten Käselaibe tauschen, so dass diese abwechselnd bei einem Ende des Käsebrettes liegen.

Anstelle der Wendepaare können auch mehr als zwei Wendeaufnahmen jeweils zusammen um die gleiche Wendeachse bewegbar sein. Wenn in einem Käselager auf jedem Käsebrett beispielsweise sechs Käse gelagert sind, so können zwei Wendegruppen mit je drei Wendeaufnahmen eingesetzt werden. Die Wendeachsen der beiden Wendegruppen werden in Richtung der Anordnungsachse in Abständen zueinander angeordnet. Die gemeinsame Wendeachse einer Wendegruppe liegt zweckmässigerweise in einer zentralen Ebene zwischen deren Wendeaufnahmen mit dem grössten Abstand zueinander.

Eine besonders vorteilhafte Ausführungsform ist so ausgebildet, dass alle Käselaibe bei jedem Wendevorgang in der Richtung der Anordnungsachse versetzt werden, wobei jeweils ein Käselaib von einer ersten seitlichen Endposition der Reihe von Käselaiben zu einer von der ersten seitlichen Endposition abgewandten zweiten seitlichen Endposition versetzt wird und die anderen Käselaibe je um eine Position gegen die erste seitliche Endposition versetzt werden. Dazu ist die mittlere Wendeachse, der in Abständen zueinander angeordneten mindestens drei Wendeachsen, einer in Richtung der Anordnungsachse seitlich angeordneten Wendeaufnahme zugeordnet.

Die Positionen der Käselaibe sind durch die Positionen von Mittelpunkten der Wendeaufnahmen vor bzw. nach dem Wendevorgang festgelegt. Die Wendeachse der zwischen den seitlichen Endpositionen bewegbaren Wendeaufnahme ist so angeordnet, dass der Abstand von dieser Wendeachse zu den beiden seitlichen Endpositionen gleich gross ist. Bei den anderen Wendeaufnahmen entspricht der seitliche Abstand ihrer Wendeachse von ihrem Mittelpunkt dem halben Abstand zwischen benachbarten Positionen.

Die Verbindungen von den Wendeachsen zu den zugeordneten Wendeaufnahmen sind vorzugsweise in der Form von Armen ausgebildet, wobei der Arm zur Wendeaufnahme bei der ersten seitlichen Endposition länger ist als die Arme zu den anderen Wendeaufnahmen. Vor dem Wenden erstreckt sich der längere Arm ausgehend von seiner Wendeachse in einer ersten Richtung gegen die erste seitliche Endposition. Alle kürzeren Arme erstrecken sich ausgehend von ihren Wendeachsen entgegengesetzt zum längeren Arm in eine entgegengesetzte zweite Richtung gegen die zweite seitliche Endposition.

Beim Wenden drehen alle Arme in der gleichen ersten Drehrichtung vorzugsweise um 180° um ihre jeweiligen Wendeachsen. Beim Rückstellen der leeren Wendeaufnahmen drehen die Arme in einer zur ersten Drehrichtung entgegengesetzten zweiten Drehrichtung vorzugsweise um 180° zurück. In beiden Endpositionen der Wendeaufnahmen übergreift der lange Arm je mindestens einen der kurzen Arme, wobei die kurzen Arme für das Übergreifen des langen Arms passende u-förmige Freiräume aufweisen.

Wenn der lange Arm beim Wenden und beim Zurückführen nach oben und die kurzen Arme nach unten bewegt werden, so wird nur oberhalb der Wendeachsen ein an den langen Arm und die halbe Breite der Wendeaufnahme angepasster grosser Platz benötigt. Unterhalb der Wendeachsen genügt ein an die kurzen Arme und die halbe Breite einer Wendeaufnahme angepasster kleiner Platz. Wenn unterhalb der Wendeachsen ein grosser Platz bereitsteht, kann der grosse Arm nach unten bewegt werden und die kurzen nach oben. Daher ist die Ausführungsform mit einem langen und mindestens zwei kurzen Armen vielseitig einsetzbar.

Aufgrund der Länge und Ausrichtung aller Arme ist die Summe der statischen Drehmomente ausgeglichen. Beim Drehen mit den Käselaiben müssen anfänglich grosse Massen beschleunigt und gegen das Ende der Drehbewegung gebremst werden.

Weil die Wendeachsen parallel zueinander ausgerichtet sind und das Wenden durch Bewegungen um 180° um die jeweiligen Wendeachsen erzielt wird, kann für die Bewegungen aller Wendeaufnahmen um ihre Wendeachsen eine gemeinsame Antriebseinrichtung eingesetzt werden. Nach dem Wenden werden die Wendeaufnahmen ohne Käselaibe durch Bewegungen um 180° in der jeweils zum Wenden entgegengesetzten Richtung zurückgesetzt um anschliessend den nächsten Wendevorgang zu ermöglichen. Auch für die Rückstellbewegung kann die gemeinsame Antriebseinrichtung eingesetzt werden.

Vorzugsweise umfasst die gemeinsame Antriebseinrichtung bei den Wendeachsen je ein mit der jeweiligen Wendeaufnahme verbundenes Zahnrad, eine in die Zahnräder eingreifende Zahnstange und einen Antrieb zum Bewegen der Zahnstange. Die Zahnräder sind je über eine Welle oder einen von der jeweiligen Wendeachse wegführenden Arm mit den jeweiligen Wendeaufnahmen verbunden.

Die Zahnstange kann mit einer Federeinrichtung versehen werden, welche Beschleunigungsspitzen und/oder Bremsspitzen der Wendebewegung abfedert. Die Federeinrichtung reduziert somit die vom Antrieb benötigte Beschleunigungs- und/oder Bremsleistung.

Wenn die Wendeachse der jeweiligen Wendeaufnahme ausserhalb einer Schicht angeordnet ist, welche von Ebenen begrenzt wird, welche im Aufnahmebereich der Oberseite und der Unterseite des Käselaibs zugeordnet sind, so wird der im Aufnahmebereich angeordnete Käselaib beim Bewegen der Wendeaufnahme um 180° um ihre Wendeachse sowohl gewendet als auch in der Richtung orthogonal zur Anordnungsachse und zur Wendeachse zumindest um die Höhe bzw. Dicke des Käselaibs versetzt. Dadurch kann das Zuführen der Käselaibe zum Wenden und das Übergeben der Käselaibe nach dem Wenden auf unterschiedlichen Höhen durchgeführt werden.

Die Käselaibe können mit einer Fördereinrichtung zum Fördern von Käsebrettern mit Käselaiben zur Wendevorrichtung und von dieser weg geführt werden. Bei der Wendevorrichtung werden die Käselaibe von einem mit der Fördereinrichtung zugeförderten Käsebrett in die Wendeaufnahmen eingefüllt und nach dem Wenden von den Wendeaufnahmen gegebenenfalls wieder auf ein Käsebrett oder in eine Behandlungsvorrichtung, beispielsweise in eine Schmiervorrichtung, gebracht.

Die erfindungsgemässe Wendevorrichtung ist vielseitig einsetzbar. Besonders vorteilhaft kann sie zur Verwendung in einer Schmiervorrichtung eingesetzt werden. In einer Schmiervorrichtung mit der erfindungsgemässen Wendevorrichtung werden die gewendeten Käselaibe beispielsweise auf Drehtellern gedreht und von Bürsten unter Zufuhr salzhaltiger Flüssigkeit geschmiert. Zum Schmieren können drehbare Tellerbürsten und drehbare Randbürsten eingesetzt werden, wobei die Tellerbürsten zum Behandeln der Käseoberseite und die Randbürsten zum Behandeln der Järbseite bzw. des Käserandes ausgebildet sind. Nach dem Schmieren werden die Käselaibe vorzugsweise wieder auf Käsebretter aufgelegt und in das Regallager gebracht.

Eine Anlage mit einer Wendevorrichtung und mit einer Schmiereinrichtung kann ein effizientes Wenden, Versetzen und Schmieren gewährleisten.

Anhand einiger Figuren wird die Erfindung im Folgenden näher beschrieben. Dabei zeigen
- Figur 1: eine perspektivische Darstellung einer selbstfahrenden Vorrichtung, die eine Wendevorrichtung mit drei Wendeaufnahmen umfasst,
- Figur 2: eine Frontansicht der in Fig. 1 dargestellten selbstfahrenden Vorrichtung,
- Figur 3: eine Frontansicht einer Wendevorrichtung mit drei Wendeaufnahmen vor dem Wenden,
- Figur 4: eine Frontansicht der Wendevorrichtung aus Fig. 3 beim Wenden,
- Figur 5: eine Draufsicht auf die Wendevorrichtung aus Fig. 3,
- Figur 6: eine rückseitige Ansicht der Wendevorrichtung aus Fig. 3 beim Wenden
- Figur 7: eine rückseitige Ansicht der Wendevorrichtung aus Fig. 3 beim Wenden,
- Figur 8: eine perspektivische Darstellung der Wendevorrichtung aus Fig. 3 beim Wenden,
- Figur 9: eine perspektivische Darstellung der Wendevorrichtung aus Fig. 3 nach dem Wenden,
- Figur 10: eine Frontansicht einer Wendevorrichtung mit vier Wendeaufnahmen vor dem Wenden,
- Figur 11: eine Frontansicht der Wendevorrichtung aus Fig. 10 nach dem Wenden.
- Figur 12: eine perspektivische Darstellung der Wendevorrichtung aus Fig. 10 beim Wenden.

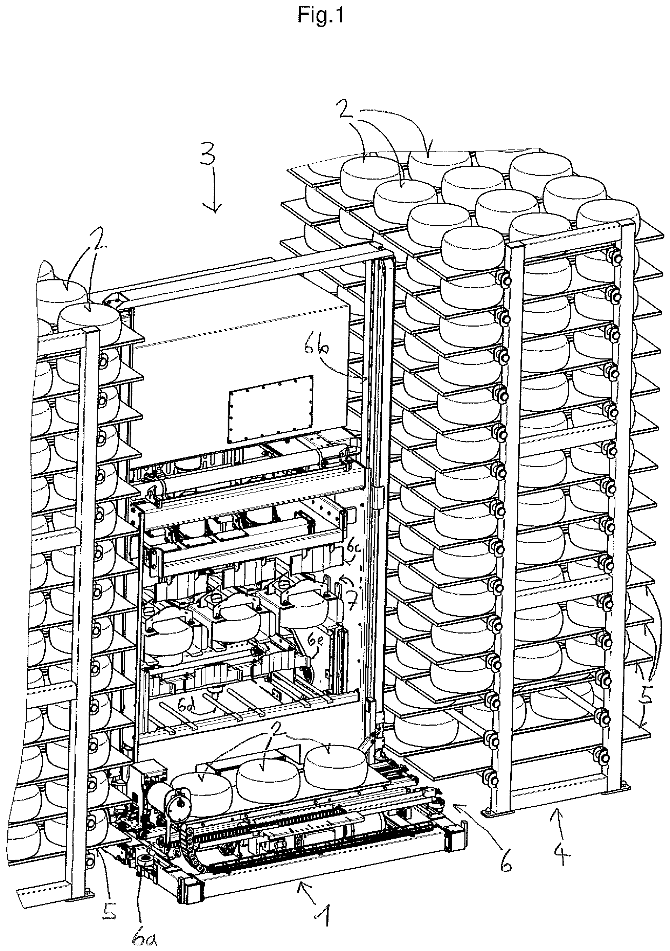

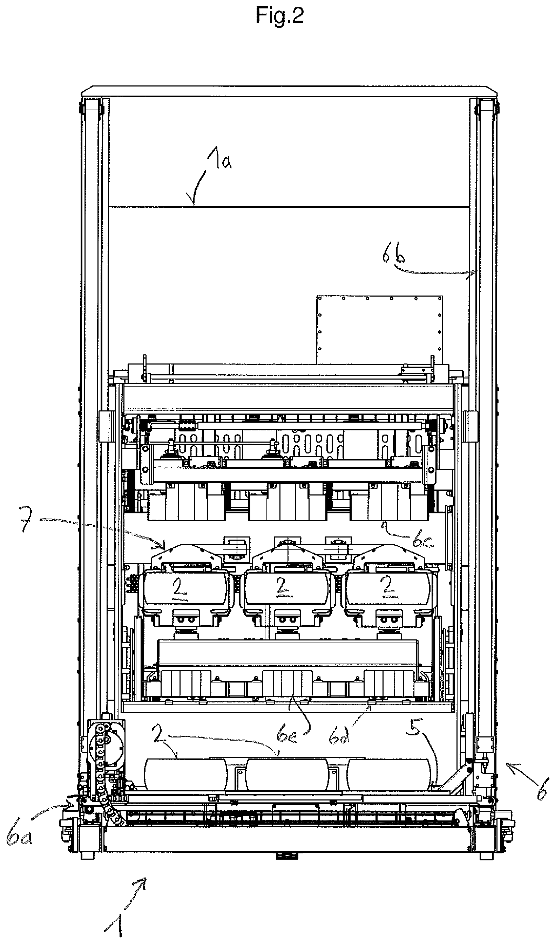

Die Figuren 1 und 2 zeigen eine selbstfahrende Behandlungsvorrichtung 1 zum Behandeln von Käselaiben 2, die sich durch eine Lagergasse 3 bewegt und seitlich der Lagergasse 3 gelagerte Käselaibe 2 behandelt. Die für die Behandlungsvorrichtung 1 benötigten Speise- und Steuerungselemente sind im Gehäuse 1a angeordnet. Die seitlich der Lagergasse 3 in einem Lagergestell 4 auf Käsebrettern 5 gelagerten Käselaibe 2 werden auf den Käsebrettern 5 von einer Fördereinrichtung 6 zu einer Wendevorrichtung 7 gebracht und von dieser gewendet. Es können jeweils drei Käselaibe 2 miteinander gewendet werden. Die dargestellte Behandlungsvorrichtung umfasst eine nicht dargestellte Schmiereinrichtung. Nach dem Wenden werden die Käselaibe 2 in der Schmiereinrichtung geschmiert und dann wieder von der Fördereinrichtung 6 auf einem Käsebrett 5 im Lagergestell 4 eingelagert.

Die Fördereinrichtung 6 umfasst eine Brettübernahme-Einrichtung 6a, eine Vertikal-Bewegungseinrichtung 6b und erste, zweite sowie dritte Übergabeeinrichtungen 6c, 6d und 6e. Die erste Übergabeeinrichtung 6c übergibt die Käselaibe 2 von einem Käsebrett 5 auf der Brettübernahme-Einrichtung 6a an die Wendevorrichtung 7. Die zweite Übergabeeinrichtung 6d übergibt gewendete Käselaibe 2 an die Schmiereinrichtung und zusammen mit der dritten Übergabeeinrichtung 6e geschmierte Käselaibe 2 von der Schmiereinrichtung an ein Käsebrett 5 auf der Brettübernahme-Einrichtung 6a.

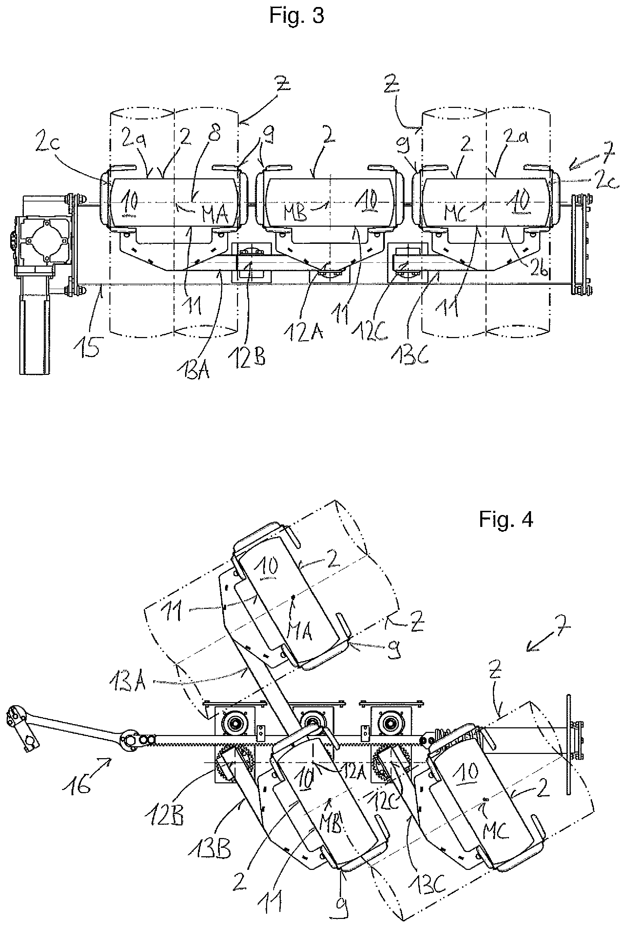

Die Figuren 3 bis 9 zeigen eine Wendevorrichtung 7 mit drei entlang einer Anordnungsachse 8 nebeneinander angeordnete Wendeaufnahmen 9 in denen die Käselaibe 2 so wendbar sind, dass die Käseoberseiten 2a und die Käseunterseiten 2b der Käselaibe 2 ihre jeweiligen Relativpositionen wechseln.

Jede Wendeaufnahme 9 umfasst einen Aufnahmebereich 10 zum Halten einer Käseoberseite 2a bzw. einer Käseunterseite 2b parallel zu einer Aufnahmeebene 11. Jede Wendeaufnahme 9 ist um eine Wendeachse 12A, 12B, 12C bewegbar, welche quer, vorzugsweise orthogonal, zur Anordnungsachse 8 verläuft. Die drei Wendeachsen 12A, 12B, 12C der Wendeaufnahmen 9 sind in Richtung der Anordnungsachse 8 in Abständen zueinander angeordnet. Die Positionen der Käselaibe sind durch die Positionen von Mittelpunkten MA, MB, MC der Wendeaufnahmen 9 vor bzw. nach dem Wendevorgang festgelegt. Beim Wenden wird der Mittelpunkt MA um die Wendeachse 12A, der Mittelpunkt MB um die Wendeachse 12B und der Mittelpunkt MC um die Wendeachse 12C bewegt.

Für einen Wendevorgang werden Käselaibe 2 in die Wendeaufnahmen 9 eingebracht. Die Wendeaufnahmen 9 mit den darin angeordneten Käselaiben 2 werden um ihre Wendeachse 12A, 12B, 12C bewegt, vorzugsweise um 180°. Danach werden die gewendeten Käselaibe 2 aus den Wendeaufnahmen 9 entnommen.

In der dargestellten Ausführungsform verläuft die Wendeachse 12A, 12B, 12C jeder Wendeaufnahme 9 parallel zur Aufnahmeebene 11 der jeweiligen Wendeaufnahme 9. Damit wird gewährleistet, dass die Aufnahmeebene 11 jeder Wendeaufnahmen 9 vor und nach dem Wenden parallel ausgerichtet ist.

In der dargestellten Ausführungsform verläuft die Wendeachse 12A, 12B, 12C der jeweiligen Wendeaufnahme 9 ausserhalb eines Zylindermantels Z, der an die Järbseite 2c des in der Wendeaufnahme 9 aufgenommenen Käselaibs 2 anliegt. Eine Wendeaufnahme 9 mit dieser relativ zur Wendeaufnahme 9 seitlich angeordneten Wendeachse 12A, 12B, 12C versetzt den im Aufnahmebereich 10 angeordneten Käselaib 2 beim Wenden in der Richtung der Anordnungsachse 8.

Die Wendeachse 12A der zwischen den seitlichen Endpositionen bewegbaren Wendeaufnahme 9 mit dem Mittelpunkt MA ist so angeordnet, dass der Abstand von der Wendeachse 12A zu den beiden seitlichen Endpositionen gleich gross ist. Bei den anderen Wendeaufnahmen 9 mit den Mittelpunkten MB und MC entspricht der seitliche Abstand ihrer Wendeachsen 12B bzw. 12C vom jeweiligen Mittelpunkt MB bzw. MC dem halben Abstand zwischen benachbarten Positionen.

Die Verbindungen von den Wendeachsen 12A, 12B, 12C zu den zugeordneten Wendeaufnahmen 9 mit den Mittelpunkten MA, MB, MC sind in der Form von Armen 13A, 13B, 13C ausgebildet, wobei der Arm 13A zur Wendeaufnahme 9, die sich vor dem Wenden bei einer ersten seitlichen Endposition befindet, länger ist als die Arme 13B, 13C zu den anderen Wendeaufnahmen 9. Vor dem Wenden (Fig. 3) erstreckt sich der längere Arm 13A ausgehend von seiner Wendeachse 12A in einer ersten Richtung zur ersten seitlichen Endposition. Die beiden kürzeren Arme 13B, 13C erstrecken sich ausgehend von ihren Wendeachsen 12B, 12C entgegengesetzt zum längeren Arm 13A in eine entgegengesetzte zweite Richtung gegen die zweite seitliche Endposition.

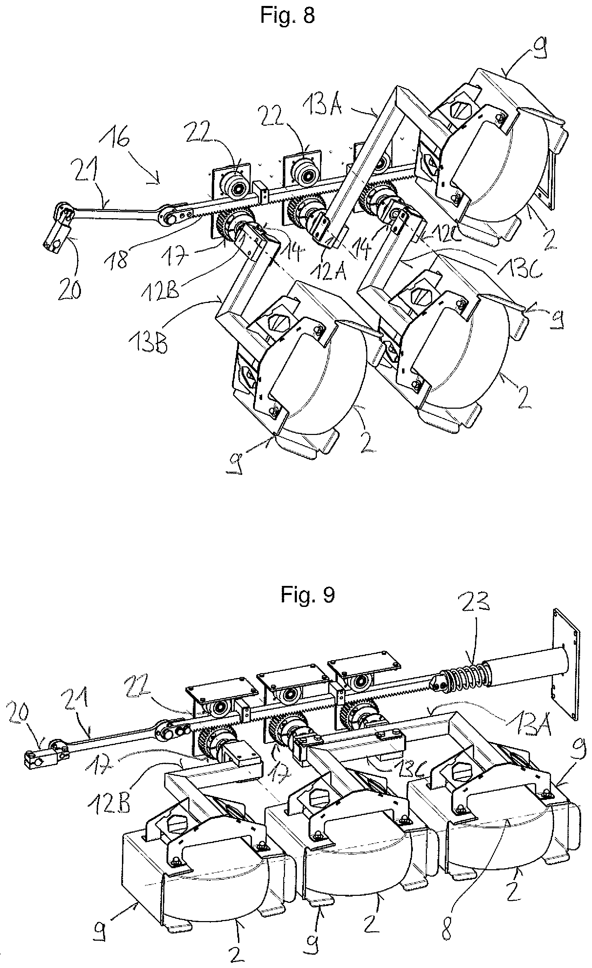

Beim mit den Figuren 4, 8 und 9 dargestellten Wenden drehen alle Arme 13A, 13B, 13C in der gleichen ersten Drehrichtung um 180° um ihre jeweiligen Wendeachsen 12A, 12B, 12C. Beim Rückstellen der leeren Wendeaufnahmen drehen die Arme in einer zur ersten Drehrichtung entgegengesetzten zweiten Drehrichtung um 180° zurück. In beiden Endpositionen der Wendeaufnahmen übergreift der lange Arm 13A je mindestens einen der kurzen Arme 13B, 13C, wobei wie in Fig. 8 dargestellt die kurzen Arme 13B, 13C für das Übergreifen des langen Arms 13A passende u-förmige Freiräume 14 aufweisen.

Weil der lange Arm 13A beim Wenden und beim Zurückführen nach oben und die kurzen Arme 13B, 13C nach unten bewegt werden, so wird nur oberhalb der Wendeachsen 12A, 12B, 12C ein an den langen Arm 13A und die halbe Breite der Wendeaufnahme 9 angepasster grosser Platz benötigt. Unterhalb der Wendeachsen 12A, 12B, 12C genügt ein an die kurzen Arme 13B, 13C und die halbe Breite einer Wendeaufnahme 9 angepasster kleiner Platz.

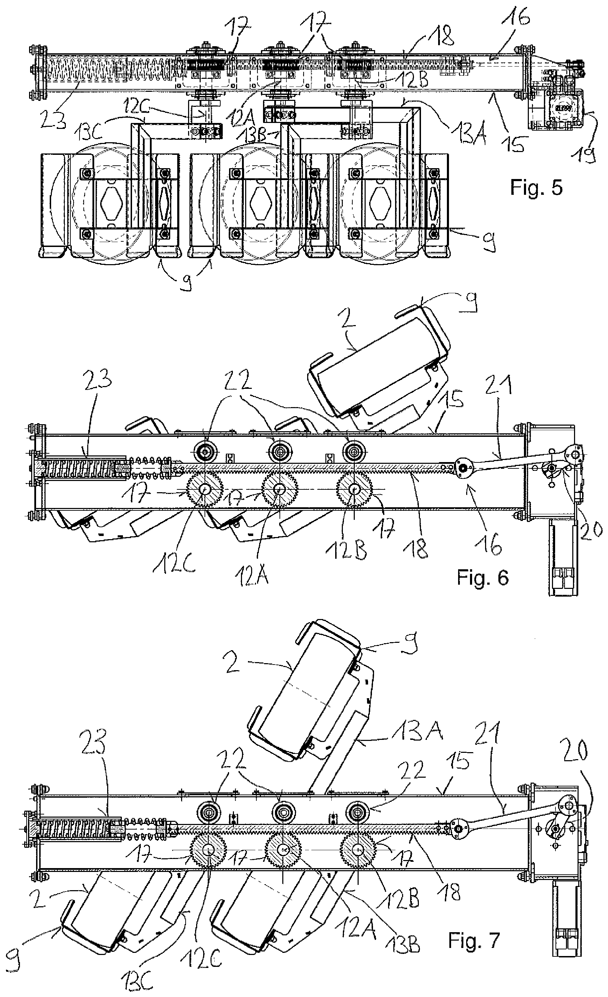

In den Figuren 5 bis 7 ist eine für die Bewegungen aller Wendeaufnahmen 9 um ihre Wendeachsen 12A, 12B, 12C an einem Tragbalken 15 angeordnete gemeinsame Antriebseinrichtung 16 gut erkennbar. Die gemeinsame Antriebseinrichtung 16 umfasst bei den Wendeachsen 12A, 12B, 12C je ein über die Arme 13A, 13B, 13C mit der jeweiligen Wendeaufnahme 9 verbundenes Zahnrad 17, eine in die Zahnräder 17 eingreifende Zahnstange 18 und einen Antrieb 19, dessen Drehbewegungen über eine kurbel 20 und einen Pleuel 21 in eine Linearbewegung der Zahnstange 18 übertragen wird. Die Zahnstange 18 ist zwischen Führungsrollen 22 und den Zahnrädern 17 geführt. Die Zahnstange ist mit einer Federeinrichtung 23 verbunden, welche Beschleunigungsspitzen und/oder Bremsspitzen der Wendebewegung abfedert.

Weil die Wendeachsen 12A, 12B, 12C je ausserhalb einer Schicht angeordnet sind, welche von Ebenen begrenzt wird, welche im zugehörigen Aufnahmebereich 10 der Oberseite und der Unterseite des Käselaibs 2 zugeordnet sind, werden die in den Aufnahmebereichen angeordneten Käselaibe 2 beim Wenden auch in der Richtung orthogonal zur Anordnungsachse 8 und zu den Wendeachsen 12A, 12B, 12C zumindest um die Höhe bzw. Dicke der Käselaibe 2 versetzt. Dadurch kann das Zuführen der Käselaibe 2 zum Wenden (vgl. Fig. 3) und das Übergeben der Käselaibe 2 nach dem Wenden (vgl. Fig. 9) auf unterschiedlichen Höhen durchgeführt werden.

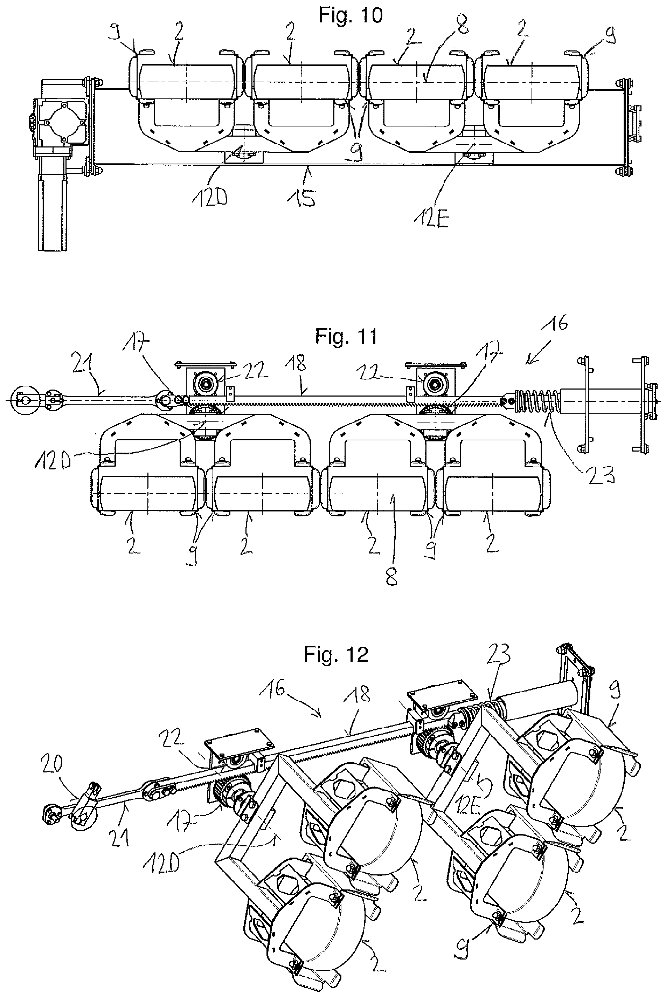

Die Figuren 10-12 zeigen eine Ausführung mit vier Wendeaufnahmen 9. Jeweils zwei benachbarte Wendeaufnahmen 9 umfassen als Wendepaar eine gemeinsame Wendeachse 12D, 12E, die in einer zentralen Ebene zwischen den beiden Wendeaufnahmen 9 liegt. Die Wendeachsen 12D, 12E der beiden Wendepaare sind in Richtung der Anordnungsachse 8 in Abständen zueinander angeordnet. Die Käselaibe 2 in den Wendeaufnahmen 9 mit der gemeinsamen Wendeachse 12D oder 12E wechseln beim Wenden ihren Platz bzw. ihre Reihenfolge in Richtung der Anordnungsachse 8. Die am Tragbalken 15 angeordnete gemeinsame Antriebseinrichtung 16 ist gleich ausgebildet wie bei der in den Figuren 3-9 dargestellten Wendevorrichtung.

## Patentansprüche

1. Wendevorrichtung (7) zum Wenden von Käselaiben (2) mit mindestens drei vor und nach dem Wenden entlang einer Anordnungsachse (8) nebeneinander angeordneten Wendeaufnahmen (9) in denen die Käselaibe (2) so wendbar sind, dass die Oberseiten (2a) und die Unterseiten (2b) der Käselaibe (2) ihre jeweiligen Relativpositionen wechseln, wobei jede Wendeaufnahme (9) einen Aufnahmebereich (10) zum Halten des Käselaibs (2) umfasst, **dadurch gekennzeichnet, dass** jede
Wendeaufnahme (9) um eine Wendeachse (12A, 12B, 12C, 12D, 12E) bewegbar ist, welche quer, vorzugsweise orthogonal, zur Anordnungsachse (8) verläuft und mindestens zwei Wendeachsen (12A, 12B, 12C, 12D, 12E) der Wendeaufnahmen (9) in Richtung der Anordnungsachse (8) in Abständen zueinander angeordnet sind.

2. Wendevorrichtung (7) nach Anspruch 1, **dadurch gekennzeichnet, dass** die Wendeachse (12A, 12B, 12C, 12D, 12E) jeder Wendeaufnahme (9) auch parallel zu einer der Oberseite (2a) oder Unterseite (2b) des Käselaibs (2) zugeordneten Aufnahmeebene (11) der jeweiligen Wendeaufnahme (9) verläuft.

3. Wendevorrichtung (7) nach Anspruch 1 oder 2, **dadurch gekennzeichnet, dass** die Wendeachse (12A, 12B, 12C, 12D, 12E) der jeweiligen Wendeaufnahme (9) ausserhalb eines Zylindermantels (Z) verläuft, der an einen Umfang des entsprechenden Aufnahmebereichs (10) anliegt und dessen Achse sich orthogonal zu einer der Oberseite (2a) oder Unterseite (2b) des Käselaibs (2) zugeordneten Aufnahmeebene (11) erstreckt, so dass der im Aufnahmebereich (10) angeordnete Käselaib (2) beim Bewegen der Wendeaufnahme (9) um ihre Wendeachse (12A, 12B, 12C, 12D, 12E) sowohl gewendet als auch in der Richtung der Anordnungsachse (8) versetzt wird.

4. Wendevorrichtung (7) nach Anspruch 3, **dadurch gekennzeichnet, dass** die Wendeachsen (12A, 12B, 12C) von mindestens drei Wendeaufnahmen (9) in Richtung der Anordnungsachse (8) in Abständen zueinander angeordnet sind.

5. Wendevorrichtung (7) nach Anspruch 4, **dadurch gekennzeichnet, dass** die mittlere der in Abständen zueinander angeordneten Wendeachsen (12A, 12B, 12C) einer in Richtung der Anordnungsachse (8) seitlich angeordneten Wendeaufnahme (9) zugeordnet ist und die Bewegungen der Wendeaufnahmen (9) um ihre Wendeachsen (12A, 12B, 12C) die Wendeaufnahmen (9) und damit die darin angeordneten Käselaibe (2) so versetzbar macht, dass ein vor dem Wenden in Richtung der Anordnungsachse (8) bei einer ersten seitlichen Endposition der Reihe von Käselaiben (2) angeordneter Käselaib (2) nach dem Wenden zu einer von der ersten seitlichen Endposition abgewandten zweiten seitlichen Endposition der Reihe von Käselaiben (2) versetzt ist und die anderen Käselaibe (2) je um eine Position gegen die erste seitliche Endposition der Reihe von Käselaiben (2) versetzt sind.

6. Wendevorrichtung (7) nach Anspruch 3, **dadurch gekennzeichnet, dass** die Wendevorrichtung (7) eine gerade Anzahl von Wendeaufnahmen (9) umfasst und jeweils mindestens zwei benachbarte Wendeaufnahmen (9) eine gemeinsame Wendeachse (12D, 12E) umfassen.

7. Wendevorrichtung (7) nach einem der Ansprüche 1 bis 6, **dadurch gekennzeichnet, dass** eine gemeinsame Antriebseinrichtung (16) die Bewegungen aller Wendeaufnahmen (9) um ihre jeweiligen Wendeachsen (12A, 12B, 12C, 12D, 12E) erzielbar macht.

8. Wendevorrichtung nach Anspruch 7, **dadurch gekennzeichnet, dass** die gemeinsame Antriebseinrichtung (16) bei den Wendeachsen (12A, 12B, 12C, 12D, 12E) je ein mit der jeweiligen Wendeaufnahme (9) verbundenes Zahnrad (17), eine in die Zahnräder (17) eingreifende Zahnstange (18) und einen Antrieb (19) zum Bewegen der Zahnstange (18) umfasst, wobei die Zahnräder (17) je über eine Welle oder einen von der jeweiligen Wendeachse wegführenden Arm mit den jeweiligen Wendeaufnahmen (9) verbunden sind.

9. Wendevorrichtung (7) nach Anspruch 8, **dadurch gekennzeichnet, dass** die Zahnstange (18) mit einer Federeinrichtung (23) so vorgespannt ist, dass die Federeinrichtung (23) beim Bewegen der Wendeaufnahmen (9) mit den Käselaiben (2) die Beschleunigungs- und/oder Bremsspitzen abfedert.

10. Wendevorrichtung (7) nach einem der Ansprüche 1 bis 9, **dadurch gekennzeichnet, dass** die Wendeachse (12A, 12B, 12C, 12D, 12E) der jeweiligen Wendeaufnahme (9) ausserhalb einer Schicht angeordnet ist, die von Ebenen begrenzt wird, welche am Aufnahmebereich (10) der Oberseite (2a) und der Unterseite (2b) des Käselaibs (2) zugeordnet sind, so dass der im Aufnahmebereich (10) angeordnete Käselaib (2) beim Bewegen der Wendeaufnahme (9) um ihre Wendeachse (12A, 12B, 12C, 12D, 12E) sowohl gewendet als auch in der Richtung orthogonal zur Anordnungsachse (8) und zur Wendeachse (12A, 12B, 12C, 12D, 12E) versetzt wird.

11. Verwendung einer Wendevorrichtung (7) nach einem der Ansprüche 1 bis 10 in einer Vorrichtung zum Schmieren von Käselaiben (2).

## Claims

1. A turning device (7) for turning blocks of cheese (2), comprising at least three turning receptacles (9), which are arranged beside one another along an arrangement axis (8) before and after the turning and in which the blocks of cheese (2) can be turned such that the tops (2a) and the bottoms (2b) of the blocks of cheese (2) switch their respective relative positions, each turning receptacle (9) comprising a receiving region (10) for holding the block of cheese (2), **characterized in that** each turning receptacle (9) is movable about a turning axis (12A, 12B, 12C, 12D, 12E) which extends transversely, preferably orthogonally, to the arrangement axis (8) and at least two turning axes (12A, 12B, 12C, 12D, 12E) of the turning receptacles (9) are arranged at distances from one another in the direction of the arrangement axis (8).

2. The turning device (7) according to Claim 1, **characterized in that** the turning axis (12A, 12B, 12C, 12D, 12E) of each turning receptacle (9) also extends in parallel with a receiving plane (11) of the relevant turning receptacle (9) associated with the top (2a) or bottom (2b) of the block of cheese (2).

3. The turning device (7) according to Claim 1 or 2, **characterized in that** the turning axis (12A, 12B, 12C, 12D, 12E) of the relevant turning receptacle (9) extends outside a lateral cylinder surface (Z), which is in contact with a periphery of the corresponding receiving region (10) and the axis of which extends orthogonally to a receiving plane (11) associated with the top (2a) or bottom (2b) of the block of cheese (2) such that, when the turning receptacle (9) is moved about its turning axis (12A, 12B, 12C, 12D, 12E), the block of cheese (2) arranged in the receiving region (10) is both turned and shifted in the direction of the arrangement axis (8).

4. The turning device (7) according to Claim 3, **characterized in that** the turning axes (12A, 12B, 12C) of at least three turning receptacles (9) are arranged at distances from one another in the direction of the arrangement axis (8).

5. The turning device (7) according to Claim 4, **characterized in that** the central turning axes (12A, 12B, 12C) arranged at distances from one another are associated with a turning receptacle (9) arranged at the side in the direction of the arrangement axis (8) and the movements of the turning receptacles (9) about their turning axes (12A, 12B, 12C) make it possible to shift the turning receptacles (9) and thus the blocks of cheese (2) arranged therein such that a block of cheese (2) arranged in a first lateral end position of the row of blocks of cheese (2) before being turned in the direction of the arrangement axis (8) is shifted after being turned into a second lateral end position of the row of blocks of cheese (2) remote from the first lateral end position and the other blocks of cheese (2) are each shifted by one position toward the first lateral end position of the row of blocks of cheese (2).

6. The turning device (7) according to Claim 3, **characterized in that** the turning device (7) comprises an even number of turning receptacles (9) and, in each case, at least two adjacent turning receptacles (9) have a common turning axis (12D, 12E).

7. The turning device (7) according to any one of Claims 1 to 6, **characterized in that** a common drive apparatus (16) makes it possible to achieve the movements of all the turning receptacles (9) about their respective turning axes (12A, 12B, 12C, 12D, 12E).

8. The turning device according to Claim 7, **characterized in that**, at each of the turning axes (12A, 12B, 12C, 12D, 12E), the common drive apparatus (16) comprises a pinion (17) connected to the relevant turning receptacle (9), a rack (18) that engages in the pinions (17), and a drive (19) for moving the rack (18), the pinions (17) each being connected to the respective turning receptacles (9) by a shaft or an arm leading away from the relevant turning axis.

9. The turning device (7) according to Claim 8, **characterized in that** the pinion (18) is preloaded by a spring apparatus (23) such that the spring apparatus (23) absorbs the acceleration and/or braking peaks when the turning receptacles (9) comprising the blocks of cheese (2) are moved.

10. The turning device (7) according to any one of Claims 1 to 9, **characterized in that** the turning axis (12A, 12B, 12C, 12D, 12E) of the relevant turning receptacle (9) is arranged outside a layer delimited by planes which are associated with the top (2a) and the bottom (2b) of the block of cheese (2) on the receiving region (10) such that, when the turning receptacle (9) is moved about its turning axis (12A, 12B, 12C, 12D, 12E), the block of cheese (2) arranged in the receiving region (10) is both turned and shifted in the direction orthogonal to the arrangement axis (8) and to the turning axis (12A, 12B, 12C, 12D, 12E).

11. The use of a turning device (7) according to any one of Claims 1 to 10 in a device for smearing blocks of cheese (2) .

## Revendications

1. Dispositif de retournement (7) permettant de retourner des meules de fromage (2) comportant au moins trois organes de réception de retournement (9) disposés, avant et après le retournement, les uns à côté des autres le long d'un axe de disposition (8) et dans lesquels les meules de fromage (2) peuvent être retournées de telle manière que les faces supérieures (2a) et les faces inférieures (2b) des meules de fromage (2) changent leurs positions relatives respectives, chaque organe de réception de retournement (9) comprenant une zone de réception (10) destinée à maintenir la meule de fromage (2), **caractérisé en ce que** chaque organe de réception de retournement (9) peut être déplacé autour d'un axe de retournement (12A, 12B, 12C, 12D, 12E) qui s'étend transversalement, de préférence perpendiculairement, à l'axe de disposition (8) et au moins deux axes de retournement (12A, 12B, 12C, 12D, 12E) des organes de réception de retournement (9) sont disposés à distance les uns des autres dans la direction de l'axe de disposition (8).

2. Dispositif de retournement (7) selon la revendication 1, **caractérisé en ce que** l'axe de retournement (12A, 12B, 12C, 12D, 12E) de chaque organe de réception de retournement (9) s'étend également parallèlement à un plan de réception (11) de l'organe de réception de retournement (9) respectif, qui est associé à la face supérieure (2a) ou la face inférieure (2b) de la meule de fromage (2).

3. Dispositif de retournement (7) selon la revendication 1 ou 2, **caractérisé en ce que** l'axe de retournement (12A, 12B, 12C, 12D, 12E) de l'organe de réception de retournement (9) respectif s'étend en dehors d'une surface latérale de cylindre (Z) qui s'applique sur une périphérie de la zone de réception (10) correspondante et dont l'axe s'étend perpendiculairement à un plan de réception (11) associé à la face supérieure (2a) ou la face inférieure (2b) de la meule de fromage (2), de telle sorte que, lors du déplacement de l'organe de réception de retournement (9) autour de son axe de retournement (12A, 12B, 12C, 12D, 12E), la meule de fromage (2) disposée dans la zone de réception (10) est non seulement retournée mais aussi décalée dans la direction de l'axe de disposition (8).

4. Dispositif de retournement (7) selon la revendication 3, **caractérisé en ce que** les axes de retournement (12A, 12B, 12C) d'au moins trois organes de réception de retournement (9) sont disposés à distance les uns des autres dans la direction de l'axe de disposition (8).

5. Dispositif de retournement (7) selon la revendication 4, **caractérisé en ce que** celui des axes de retournement (12A, 12B, 12C) disposés à distance les uns des autres qui est situé au milieu est associé à un organe de réception de retournement (9) disposé latéralement dans la direction de l'axe de disposition (8) et les déplacements des organes de réception de retournement (9) autour de leurs axes de retournement (12A, 12B, 12C) permettent de décaler les organes de réception de retournement (9), et ainsi les meules de fromage (2) disposées dans ceux-ci, de telle manière qu'une meule de fromage (2) disposée, avant le retournement, en une première position d'extrémité latérale de la rangée de meules de fromage (2) dans la direction de l'axe de disposition (8) est décalée après le retournement dans une seconde position d'extrémité latérale, située du côté opposé à la première position d'extrémité latérale, de la rangée de meules de fromage (2) et les autres meules de fromage (2) sont chacune décalées d'une position vis-à- vis de la première position d'extrémité latérale de la rangée de meules de fromage (2).

6. Dispositif de retournement (7) selon la revendication 3, **caractérisé en ce que** le dispositif de retournement (7) comprend un nombre pair d'organes de réception de retournement (9) et au moins deux organes de réception de retournement (9) voisins respectifs comprennent un axe de retournement (12D, 12E) commun.

7. Dispositif de retournement (7) selon une des revendications 1 à 6, **caractérisé en ce qu'**un système d'entraînement (16) commun permet d'obtenir les déplacements de tous les organes de réception de retournement (9) autour de leurs axes de retournement (12A, 12B, 12C, 12D, 12E) respectifs.

8. Dispositif de retournement selon la revendication 7, **caractérisé en ce que** le système d'entraînement (16) commun comprend, pour les axes de retournement (12A, 12B, 12C, 12D, 12E), une roue dentée (17) chacun reliée à l'organe de réception de retournement (9) respectif, une crémaillère (18) venant en prise dans les roues dentées (17) et un entraînement (19) destiné à déplacer la crémaillère (18), les roues dentées (17) étant chacune reliées aux organes de réception de retournement (9) respectifs par le biais d'un arbre ou d'un bras partant de l'axe de retournement respectif.

9. Dispositif de retournement (7) selon la revendication 8, **caractérisé en ce que** la crémaillère (18) est sollicitée au moyen d'un système de ressort (23) de telle manière que le système de ressort (23) amortit les pointes d'accélération et/ou de freinage lors du déplacement des organes de réception de retournement (9) avec les meules de fromage (2).

10. Dispositif de retournement (7) selon une des revendications 1 à 9, **caractérisé en ce que** l'axe de retournement (12A, 12B, 12C, 12D, 12E) de l'organe de réception de retournement (9) respectif est disposé en dehors d'une couche qui est délimitée par des plans qui, sur la zone de réception (10), sont associés à la face supérieure (2a) ou la face inférieure (2b) de la meule de fromage (2), de telle sorte que, lors du déplacement de l'organe de réception de retournement (9) autour de son axe de retournement (12A, 12B, 12C, 12D, 12E), la meule de fromage (2) disposée dans la zone de réception (10) est non seulement retournée mais aussi décalée dans la direction perpendiculaire à l'axe de disposition (8) et à l'axe de retournement (12A, 12B, 12C, 12D, 12E).

11. Utilisation d'un dispositif de retournement (7) selon une des revendications 1 à 10 dans un dispositif de frottage de meules de fromage (2).
